# EUROPEAN PATENT APPLICATION

(11) **EP 0 717 281 A1**
(43) Date of publication of application: **19.06.1996**
(21) Application number: 95810709.6
(22) Date of filing: 10.11.1995
(51) Int. Cl.: G01N 27/90

(54) **Method and apparatus for defect detection**

(30) Priority: 12.12.1994 US 355266
(71) Applicant: TUBOSCOPE VETCO INTERNATIONAL, INC., Houston, Texas 77001 (US)
(72) Inventor: Soyland, Ron R., Houston, Texas 77008 (US)
(74) Representative: Hug Interlizenz AG

(57) **Abstract**

A method and apparatus for detecting defects on a metal surface, particularly the inside surface of tubular articles. Resonance tuned electrical circuits and associated eddy current coils are used to produce an eddy current in the surface to be inspected for surface defects. Voltage changes resulting from circuit loss changes in any one of the circuits caused by the presence of defects in the metal surface adjacent to one of the coils is detected and a related output signal is produced.

## Description

### BACKROUND OF THE INVENTION

### Field of the Invention

This invention relates to a method and apparatus for detecting surface defects on metal surfaces, particularly tubular articles.

### Description of the Prior Art

It is known to detect flaws in metal tubing by measuring the magnetic flux leakage caused by these flaws. These defects may be in the form of pits or cracks on the inside surface of the tubing caused by corrosion, particularly from corrosive product carried inside the tubing.

The test devices for detecting defects of this type are normally propelled through the tubing by the product flowing through the tubing and are referred to as inspection pigs. These devices are well known in the art for supporting flaw detection apparatus within tubular articles. The detecting instruments used in conjunction with these pigs may be of the three basic types constituting magnetic, ultrasonic, and eddy current devices. One of the parameters tools of this type must determine is whether the defect is located on the inside or outside wall or surface of the tubular article. This determines the nature of the response to the defect from the standpoint of either repairing or replacing the tubing. Hence, it is necessary to have an inspection device, whether it be of the magnetic, ultrasonic, or eddy current type, that can differentiate with respect to defects on the inside and outside tubular surfaces.

Some test instruments use combinations of active magnetic flux leakage and residual flux leakage to determine in which surface the defect is located. These instruments have the disadvantage of having to noticeably separate the active field detectors from the residual field detectors. This causes a time delay between signals from the same flaw detected on each set of detectors as the instrument is moved relative to the interior of the tubing. This delay causes major problems in computerized sorting of the data output of the instrument. Also, large defects on the outside surface will often show up on the residual detector to cause a false indication. Since the signal induced in the coil is a rate-of-change determined function, the signal from a given size defect will change if the scan speed of the detecting device changes. Hence, a correction factor must be used to correct for speed-induced variations in the signal amplitude. Some instruments use small coils with weak permanent magnets to detect only near surface defects, with the weak magnetic field not penetrating the tubing wall so that it is not affected by defects on the outside surface thereof. This detection method is also affected by more powerful active magnetic fields used for detecting defects on the outside surface of the tubular article. Hence, it must be separated mechanically from these more powerful magnetic fields and thus have the same delay problems. This type of detector also tends to be extremely sensitive to mechanical vibration, giving rise to many false indications when used under typical pipeline testing conditions. Since the output of this type of detector results from magnetic induction, it suffers the same speed change disadvantage as the residual field method.

### SUMMARY OF THE INVENTION

The drawbacks of the conventional detection systems are avoided by the system of the invention. With the invention, time delay between the major defect detection system and the near surface detection system for detecting defects on the inside surface of a tubular article is eliminated by the use of tuned circuits for the near surface detection system that are not affected by the strong magnetic fields incident to the major system for detecting defects on the outside surfaces. The tuned circuit coils therefore may be located directly adjacent to the detector coils of the major detection system so that a simultaneous signal is provided if the defect is on the near surface and no surface signal if the defect is on the far or outside surface. Hence, delay problems are avoided. With the detector of the invention, the response of the tuned circuit detector is not velocity sensitive, because it does not measure magnetic induction to detect the defects. This avoids the problem of speed variations. Since magnetic induction is not used to detect the defects with the system of the invention, a strong magnetic leakage field from the far or outside surface does not generate a false signal affecting the inside detector output as with prior art systems. Hence, the system of the invention may be effectively used in conjunction with conventional systems for detecting defects on the outside surface of tubular articles.

In accordance with the invention, the detecting apparatus includes a plurality of eddy current coils adapted for positioning adjacent to a metal surface, such as the inside surface of a tubular article, on which defects are to be detected. Provision is made for exciting the coils at a substantially constant voltage and frequency to produce a current within an electrical circuit provided for each of the coils and an eddy current in the metal surface when the coils are positioned adjacent to the metal surface to be inspected for defects. Each of these circuits and associated coils are tuned to resonance. Provision is made for detecting a change in the voltage across a circuit as a function of a circuit loss (Q) change caused by a defect in a portion of the metal surface adjacent the coil of the circuit.

Detection of a circuit loss (Q) change is effected by a voltage detector that includes a diode rectifier-filter circuit provided for and coupled to each of the separate electrical circuits. This coupling may be through a coupling capacitor.

Each of the separate electrical circuits is coupled to the components for exciting the coils through an isolation impedance capacitor with the device for exciting the coils being an excitation oscillator. The output signal from the voltage detector is introduced to a recorder for recording the signal.

In accordance with the method of the invention, a plurality of eddy current coils are positioned adjacent to a metal surface, such as the inside surface of a tubular article on which defects are to be detected. The coils are moved relative to the metal surface. Separate electrical circuits are provided one for each of the coils and they are excited at a substantially constant voltage and frequency to produce an eddy current therein and within a portion of the metal surface adjacent to the coils. The circuits are tuned to resonance and thus detecting a circuit loss (Q) change in any one of the circuits is made to indicate a defect in the portion of the metal surface adjacent to the coil associated with the circuit having a circuit loss (Q) change.

As pointed out above, the method and apparatus of the invention finds particular utility with inspection devices for inspecting tubular articles.

### BRIEF DESCRIPTION OF THE DRAWINGS

Figure 1 is a schematic showing of a portion of a cross section of a tubular article having eddy current coils positioned adjacent the interior surface for inspection for defects in accordance with one embodiment of the invention; and
Figure 2 is a circuit diagram of an embodiment of a circuit suitable for use in the practice of the invention.

### DESCRIPTION OF THE PREFERRED EMBODIMENTS

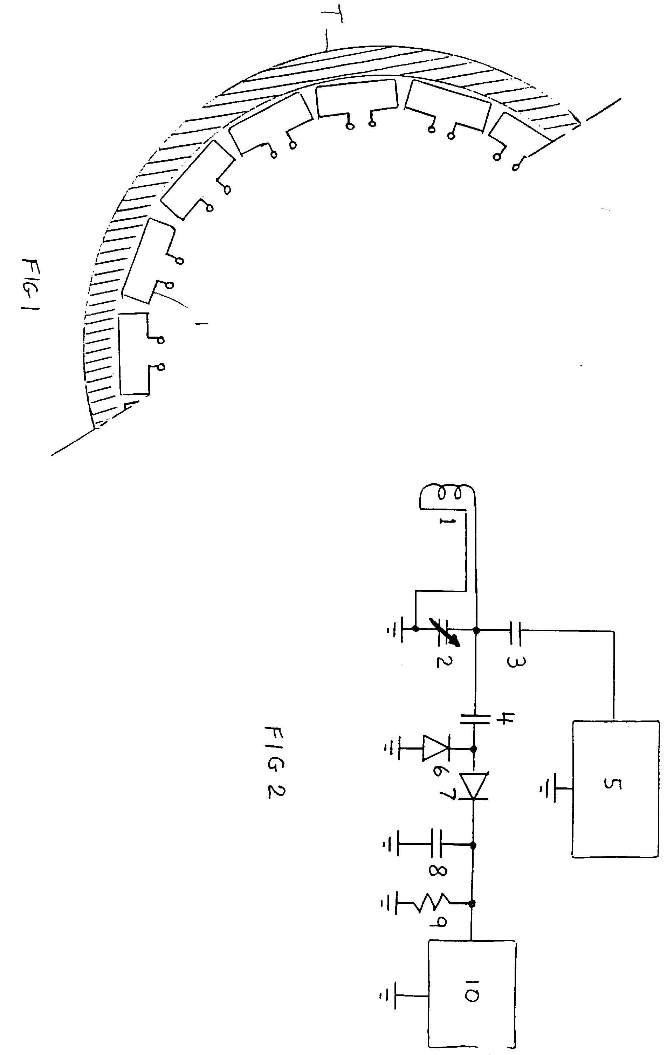

With reference to Figure 1, a portion of a tubing, designated as T, is shown with a plurality of eddy current coils 1 positioned along the inside surface thereof. As is well known in the art, these coils and associated circuitry may be moved relative to the inside tubing surface by an inspection pig (not shown). Hence, the coils 1 are arranged as shown in a circumferential ring around the inside surface of the tubing T by the use of these well known mechanical assemblies. The axis of the coils are longitudinal to the axis of the tubing. This is not, however, a necessary orientation with respect to the apparatus of the invention for effective use thereof. The assembly, as shown in Figure 1, may be used in conjunction with and thus constitute a part of an active field flux leakage inspection tool with the main inspection coils (not shown) located adjacent or directly inside of the tuned coils 1 of the detection apparatus of the invention.

Since it would be impractical to manufacture large quantities of absolutely identical coil assemblies, the frequency of operation of the circuit is maintained constant and each detector circuit is tuned to resonance by variable tuning capacitor 2 shown in Figure 2.

As the array of eddy current coils 1 is scanned along the surface of the tubing, any surface defects, such as pitting, will cause a substitution of air, or other materials such as oxide, for the normal metal material, typically steel, of the tubing. The electrical parameters of the coil are affected by both the ferrous nature of the steel causing the inductance of the coil to decrease slightly, and also the shorted-turn effect of the steel surface causing the inductance of the coil to increase slightly. Hence, a defect such as a pit causes these effects to alter and thus change the circuit loss (Q) of the tuned circuit. This results in a change in the voltage across the tuned circuit as it moves along a surface having defects. Although the resonant frequency changes only slightly in the presence of defects, the corresponding circuit loss (Q) changes drastically because the major source of loss in the circuit is the circulating current loss in the material of the tubing being inspected, which translates into energy absorbed from the tuned circuit. Since the voltage across the tuned circuit is determined most significantly by the circuit loss, the change in voltage due to a defect passing a coil is noticeably larger than the changes in the reflected coil impedance, which is the indication commonly used for detection in eddy current detector circuits of the prior art.

With respect to Figure 2, the eddy current coil 1 and associated variable tuning capacitor 2 are coupled through an isolation impedance capacitor 3, which may be resistive or reactive, to an excitation oscillator 5. The oscillator 5 may be CTX Corporation Model No. CTX150-ND 1mHZ.

This oscillator is regulated in both frequency and amplitude so that stray signals are not produced which would interfere with the desired change in resonant frequency. A crystal controlled oscillator powered with a regulated voltage is suitable for this purpose. The waveform is preferably sinusoidal, but other waveforms could be used. The amplitude is not critical as long as it is sufficient to operate the voltage detector. The voltage detector in the circuit embodiment shown in Figure 2 is a diode rectifier-filter circuit having diodes 6 and 7 and capacitor 8 coupled to the tuned circuit through a coupling capacitor 4. A resistor 9 is provided to establish the recovery time of the circuit. The output of the voltage detector may be fed to a recorder 10 to record the signal for later evaluation.

The tuned circuit is adjusted to resonance using variable tuning capacitor 2 without contact to the wall of the tubing being tested. This produces a maximum output voltage to the recorder. When the tuned circuit is then placed into position adjacent to the wall of the pipe to be tested, losses occur in the circuit because of transformer action between the tuned circuit and the conductive surface of the tubing. This causes current flow in the pipe wall which is resisted by the intrinsic resistance of the metal of the tubing. This resistance converts the current to power which is lost from the system thereby causing a decrease in voltage across the tuned circuit. This results from the circuit having limited input power due to the isolation impedance provided by capacitor 3. The voltage is detected by the voltage detector circuit which establishes a base line in the recorder 10. If a defect moves through the current carrying area created by the eddy current coil of the tuned circuit, the metal of the tubing wall is replaced by another material, such as air or pipeline fluid product, to cause a change in loss in the circuit. This is reflected into the tuned circuit and voltage detector as an increase in voltage. This voltage change is then saved on the recorder along with distance location for future analysis.

A system in accordance with the invention may consist of many tuned circuit-voltage detector sets all coupled to either a magnetic data recorder, or to a computerized data acquisition system which would format the signals prior to saving them. In any event, the apparatus and method of the invention would be applied with respect to detecting defect indicating signals. The formatting and storage of data of this type are well known in the art.

## Claims

1. Apparatus for detecting defects on a metal surface comprising, a plurality of eddy current coils adapted for positioning adjacent to a metal surface on which defects are to be detected, means for exciting said coils at a substantially constant voltage and frequency to produce an eddy current within separate electrical circuits, one for each of said coils, and the metal surface when said coils are positioned adjacent to the metal surface, with each said separate electrical circuit being tuned to resonance, and means for detecting a voltage change in any one of said separate electrical circuits caused by a defect in a portion of the metal surface adjacent said coil of said one circuit.

2. The apparatus of claim 1, wherein said means for detecting a voltage change is a voltage detector that includes a diode rectifier-filter circuit.

3. The apparatus of claim 2, wherein said diode rectifier-filter circuit is coupled to each of said separate electrical circuits through a coupling capacitor.

4. The apparatus of claim 1, wherein an output signal from said voltage detector is introduced to a recorder for recording said signal.

5. The apparatus of claim 1, wherein each of said separate electrical circuits is coupled to said means for exciting said coils through an isolation impedance capacitor.

6. The apparatus of claim 1, wherein said means for exciting said coils includes an excitation oscillator.

7. The apparatus of claim 1, wherein said metal surface on which defects are to be detected is an inside surface of a tubular article.

8. A method for detecting defects on a metal surface comprising, positioning a plurality of eddy current coils adjacent to a metal surface on which defects are to be detected, moving said coils relative to said metal surface, providing separate electrical circuits one for each of said coils, exciting each of said circuits and coils at a substantially constant voltage and frequency to produce an eddy current therein and within a portion of said metal surface adjacent said coils, tuning said circuits to resonance, and detecting a voltage change in any one of said circuits indicating a defect in a portion of said metal surface adjacent to the coil associated with said one of said circuits.

9. The method of claim 8, wherein said metal surface is an inside surface of a tubular article.
